# EUROPEAN PATENT APPLICATION

(11) **EP 4 803 034 A1**
(43) Date of publication of application: **09.09.2026**
(21) Application number: 24883670.2
(22) Date of filing: 30.10.2024
(51) Int. Cl.: A61C 8/00

(54) **TRANSNASAL DENTAL IMPLANT**

(30) Priority: 30.10.2023 BR 102023022762; 29.10.2024 BR 102024022507
(71) Applicant: Camargo, Vanderlim Branco, 88015460 Florianópolis (BR)
(72) Inventor: Camargo, Vanderlim Branco, 88015460 Florianópolis (BR)
(74) Representative: Budde Schou A/S
(86) International application number: PCT/BR2024/050495
(87) International publication number: WO 2025/091098

(57) **Abstract**

The present patent refers to a Transnasal dental implant for treating maxillae with missing teeth and severe bone atrophy, facilitating the execution of the Vanderlim Technique and offering an alternative to the use of four zygomatic implants, *"quad zygoma".* The implant was developed to achieve anchorage in all nasal conchae anatomies, with the advantages of reducing the complexity of the surgery, serving a greater number of patients, allowing immediate installation of a fixed total prosthesis and improving predictability and long-term stability. The Transnasal dental implant (1) has a head (11) with an upper thread (111) and an indicator (116); a body (12) with a smooth section (121) and a thread (122); and a tip (13) with a helical cut-out (131).

## Description

### Technical field

This patent relates to a transnasal dental implant for the Vanderlim technique, applied in the field of dental implants, more specifically full arch implants. The Transnasal dental implant, in conjunction with the Vanderlim Technique, is intended to be a simpler, less traumatic and more predictable treatment option, avoiding the use of four zygomatic implants, "quad zygoma", to treat cases of severe atrophic maxillae, while maintaining the possibility of installing total or partial immediate fixed prostheses. The transnasal implant has the advantages of reducing the complexity of surgeries, better post-operative recovery, less risk of surgical complications and making it possible to treat a larger number of patients.

### Background

The total loss of teeth, also known as total edentulism, has a number of consequences that affect the physical, psychological and social health of the affected individual. Missing teeth compromise chewing, leading to inadequate food intake and, consequently, nutritional problems. Patients who use removable dentures face discomfort and instability, impacting their self-esteem and increasing the risk of social isolation, anxiety and depression. Dental implants are an alternative that has become essential for the rehabilitation of these patients, restoring function, aesthetics and quality of life.

In individuals without teeth, the alveolar bone is resorbed, resulting in a progressive loss of bone volume. The treatment of these cases, before the 2000s, involved several complex and lengthy surgeries, including bone grafts, which could take more than a year to complete. With advances in techniques, inclined implants and the "All on 4" concept, conceived by Professor Paulo Maló. The "All on 4" approach uses only four implants per arch, two anterior and two inclined, optimizing bone anchorage, reducing costs and treatment time. There are also variations such as "All on 4 Standard" for moderate atrophies, "All on 4 Hybrid" for advanced atrophies and "All on 4 Zygoma" for severe atrophies, which use four implants anchored in the zygomatic bone, avoiding the need for grafts.

Zygomatic implants are a specialized variation of dental implants specially designed for patients who have advanced or severe maxillary bone atrophy, a condition in which it is not possible to install conventional dental implants. Their main purpose is to provide a solution for patients who have lost many upper teeth or have severe bone resorption in the maxillary region. These implants are longer than simple implants, allowing them to be anchored in the zygomatic bones, which are bones situated laterally to the face and form the prominence of the cheek, rather than in the alveolar bone where the teeth are inserted.

However, the use of zygomatic implants presents significant challenges, especially in cases of severe bone atrophy. The anatomy of the zygomatic bone region is complex and involves the proximity of vital structures such as the orbit and maxillary sinuses, increasing the risk of complications. Therefore, this kind of procedure is mastered by few specialists, due to its requirement of high precision and surgical experience. In addition, it is more invasive, which can result in greater post-operative discomfort and a higher cost, due to the complexity and materials used. These challenges make the QuadZygoma procedure only suitable for extreme cases where other options are not viable.

In order to simplify this surgical operation, the inventor developed an alternative technique called the "Transnasal Implant Technique - Vanderlim" (Copyright registration number 816383 Book 1587 Sheet 471, Brazilian National Library). The Transnasal Implants are anchored apically in the frontal process of the maxilla and nasal concha, crossing the nasal cavity, tangenting the distal wall, and anchored at their base in the residual alveolar bone of the anterior maxilla. This technique was developed to increase bone availability in the anterior region of the maxilla, making it possible to install a conventional implant in this region, accompanied by a posterior zygomatic implant, (Source: Book of Clinical Solutions for total rehabilitation on implants without bone grafts 2019/ Chapter 13). The transnasal implants (Vanderlim Technique) then offered a simpler alternative to the second zygomatic implant.

In order to offer an implant specially designed to be used in conjunction with the Vanderlim Technique, a new transnasal dental implant was developed.

The new Transnasal Implant, optimized for the Vanderlim Technique, has an anatomical design specially developed to better adapt to the nasal cavity, providing secure fixation in severely atrophic maxillae, without invading adjacent structures. The implant also simplifies the surgical procedure compared to the Quad Zygoma technique, making it accessible to a greater number of surgeons, with a shorter learning curve.

The geometry of the nasal anchorage guarantees excellent predictability and long-term stability, thanks to the high bone density of the nasopalatine region, optimizing clinical success in cases of atrophic maxilla. Additionally, the design lowers risks associated with zygomatic techniques, such as orbital perforations and inflammation, as well as reducing the risk of trauma to the maxillary sinuses, since it eliminates the need for four zygomatic implants. The implant's versatile design allows it to be applied in a variety of clinical situations, ranging from large hospital centers to small clinics, which broadens the application of the Vanderlim Technique and facilitates its adoption in different scenarios.

These advantages demonstrate how the new Transnasal Implant can transform the treatment of atrophic maxilla, offering more effective and predictable solutions.

To better define the state of the art, national and international patent databases were consulted, revealing the following relevant prior art.

The Brazilian patent BR202019001133 entitled "Zygomatic implant with partially interrupted threaded portion" reveals an implant consisting of an elongated, cylindrical body; a conical apical region covered by a thread and provided with at least three helical chambers and a semi-spherical end; and a cervical region defined by a smooth cervical surface, with the elongated and cylindrical body comprising at least one longitudinal strip with a substantially smooth surface, said smooth longitudinal strip being located in the cervical portion of the zygomatic implant; the connection between the threads and the smooth longitudinal strip is made by a transition curvature, and the smooth longitudinal strip is aligned with one of the flat faces of the internal section with a hexagonal cross-section of the implant's prosthetic interface.

Chinese patent CN214549673 entitled "Zygomatic implant and oral implant" discloses a zygomatic implant comprising an implant head, an implant transition part and an implant neck that are sequentially connected, the implant head is a conical body and comprises a guide part and an installation part that are connected, the surface of the guide part is smooth surface, and the end, away from the installation part, of the guide part is a spherical surface; the transition part comprises a maxillary sinus smooth surface part and an alveolar bone threaded part that are connected, the mounting part is connected to the maxillary sinus smooth surface part and the alveolar bone threaded part is connected to the implant neck; a plurality of threaded sections are sequentially arranged on the periphery of the mounting part and a chip groove is formed in the mounting part. The smooth surface portion of the maxillary sinus is located on the inner or outer side of the maxillary sinus bone and is an unmachined smooth surface, the mucosa of the maxillary sinus can be protected and biological complications are avoided. The alveolar bone wire part is located in the alveolar bone part and can be well combined with the alveolar bone.

Brazilian patent BRPI0604657 entitled "Cortical screw for zygomatic fixation system" discloses screws of suitable sizes, longer than conventional screws, with prior surface treatment, in conjunction with a monobloc angular adjustment element, whose function is to provide a correct angle for fixing the prosthetic elements or prosthetic platform in the oral cavity.

Chinese patent CN218484682 entitled "Cheekbone implant and implant assembly" which discloses a cheekbone implant comprising an implant head part, an implant transition part and an implant neck part which are connected in sequence, the implant head part comprising a conical part and a cylindrical part, and the conical part comprising a first threaded area; the cylindrical part comprises a second threaded area; a concave area is arranged on the outer surface of the implant transition part, the implant neck part comprises a third threaded area and a smooth platform area, and the third threaded area is connected to the implant transition part. The outer surface of the transition part of the implant is provided with the concave area, and the transition part of the implant is arranged on the cheekbone part, so that the face cannot get too high by matching the concave area

The implants disclosed by patents BR202019001133, CN214549673U, BRPI0604657B8 and CN218484682U consist of different models of zygomatic implants and are indicated for zygomatic implant techniques and are not indicated for the "Transnasal Implant Technique - Vanderlim Technique" and for these reasons the number of patients that can be treated is limited. Zygomatic implants, as revealed by the aforementioned patents, when used as transnasal implants, do not have adequate sizes and have a larger tip designed to be anchored to the zygomatic bone. The threaded side of the implants can damage the nasal mucosa, preventing proper healing and increasing the risk of inflammation. The length of these implants is longer to reach the zygomatic bone, so they are not suitable for use as Transnasal Implants.

Furthermore, for the installation of dental implants using the "Transnasal Implant Technique - Vanderlim Technique" (copyright registration no. 816383 book 1587 sheet 471), long conventional dental implants measuring 20mm to 25mm are used, the same implants that are used in the All on 4 Standard Technique (NobelBiocare^{™}). This type of implant has the same design as the state-of-the-art implants, with a cylindrical or conical body, spirals along the entire length and a head where the intermediaries are installed to screw the prostheses in place. The difficulties of using conventional long implants for the "Transnasal Technique - Vanderlim Technique" are that they are only applicable in cases where the patient has large nasal conchae, due to their bulkiness, and can cause fractures in the more delicate nasal bones, limiting the number of patients who can be treated.

It can, therefore, be seen that with the implants presented in the state of the art, the possibility of performing implants using the "Transnasal Technique - Vanderlim Technique" is greatly reduced, restricting implantologists to QuadZygoma surgeries, which are extremely complex.

"TRANSNASAL DENTAL IMPLANT", the subject of this patent, was developed to overcome the disadvantages of conventional long implants. The anatomical design of the implant is more compatible with the residual osseous anatomy of the maxilla, with the bone of the lateral wall of the nasal cavity, with the canine abutment and adapts better to the varying osseous volumes of the nasal concha, which can be large, medium or small. The thinner tip makes it possible to anchor in any of the three different volumes of nasal concha, avoiding fractures and achieving high torque for immediate loading. The body of the implant has threads only at 180° and is smooth at the other 180°, where the threads help to obtain torque and, when properly seated, will face the bone of the lateral maxillary wall. The smooth part, without threads, better accommodates the soft tissue, eliminating the possibility of irritation or inflammation of this tissue. In this way, the invention has been developed to obtain high torque and allow the patient to be rehabilitated with immediate loading in all cases and, consequently, to offer a simpler alternative to surgeries that require the use of the QuadZygoma technique.

The prior art presents the following problems and technical shortcomings that have been solved by the present invention, as shown below:
a. The dental implants used today have been designed to be placed at the same level as the bone crest, which can lead to problems such as inflammation of the soft tissues around the implant by encouraging the growth of bacteria, such as mucositis and peri-implantitis. The increased risk of bone resorption around the implant, which can easily evolve into loss of support, residual crest and buccosinusal communication. This problem was solved by the present patent by increasing the length of the head by 1.5mm, which made the implant supraosseous, avoiding marginal bone loss and inflammation of the soft tissues.
b. The dental implants currently used have threads throughout the body, with no purpose when in contact with the soft tissues (nasal mucosa) in anatomical classifications NASA 0,1,2,3 or vestibular flap in anatomical classification NASA 4. This problem has been solved by the present patent through threads positioned at only 180° from the body, maintaining contact with the bone and increasing the torque for immediate loading without being exposed, preventing irritation.
c. The dental implants currently used have very bulky apexes, as they were not developed to anchor in nasal conchae, which have a thin and delicate bone structure. 23.2% of patients have a large nasal concha (greater than 4.8mm) and only in these cases is it possible to install implants with bulky apexes. Where 55% of patients have a medium nasal concha (between 3.5mm and 4.8mm), risky cases for the placement of implants currently used and 21.8% of cases have a small nasal concha (less than 3.5mm), which are insufficient for the placement of currently used implants. This problem was solved with the development of an implant with a thinner apex, making it possible to use it in all nasal concha volumes. This apex requires minimal wear of the nasal concha during drilling to make the surgical bed for implant placement, reducing the risk of concha fracture during drilling and implant placement, which can compromise primary stability. The small amount of wear on the nasal concha also prevents resorption of this bone, which could compromise the implant's long-term stability.
d. The implants currently available on the market make the procedure more difficult and increase surgical complexity, as they were developed to be used in "all on 4" techniques (Nobel Biocare^{™}), where the bone is more voluminous. This problem has been solved by the present patent through the development of an ideal Transnasal Implant, with a simpler operation, allowing ordinary surgeons to perform the surgery and be able to treat more cases, offering high initial stability and helping to preserve the integrity of the bone, avoiding fractures in the implant placement phase and preventing resorption of the thin bones of the nasal conchae.

For more than a decade, Dr. Vanderlim Branco Camargo has worked on the research and development of the Transnasal Implants technique, entitled "Vanderlim Technique", he has made several national and international publications, including mentions in the books "Clinical Solutions Vol 1, Gram, 2019 and 2022"; "Remote Anchorage Solutions for Severe Maxillary Atrophy, 2023"; and "Advanced Zygomatic Implants, Dr. Carlos Aparício, 2023", obtaining worldwide recognition as the creator of the technique.

Throughout his career, the inventor has observed several disadvantages with the "quad zygoma" procedure for zygomatic implants, which is often used in cases of severe maxillary bone atrophy where bone grafts are not recommended. This practice, in addition to being highly complex, was also limited by various factors, such as insufficient bone volume, low bone density, initial implant instability, positioning of the infraorbital foramen in the path of the second zygomatic implant or concavity in the anterior maxillary wall.

In order to overcome these disadvantages and to treat his own patients more easily and effectively, the inventor developed an innovative approach called the Vanderlim Technique. This new approach presented a new way of placing implants through the nasal cavity and anchoring them in the basal bone of the maxilla, more specifically in the frontal part, known as zone 1. In this way, a greater availability of bone in the anterior maxillary region is obtained, allowing the installation of conventional dental implants, together with posterior zygomatic implants.

This approach has become a notable advance in dentistry, allowing the recovery of oral function and aesthetics in patients with total teeth loss in the upper arch and with severe bone loss, allowing for treatment of these patients without the need for extensive bone grafting procedures. Resulting in a substantial improvement in the patients quality of life.

Currently, for the installation of a Transnasal Implant using the Vanderlim Technique, long dental implants (20mm to 25mm) that already exist on the market are used. These implants are usually used for other techniques, being designed with larger apexes to anchor in larger bones. Consequently, several limitations have been introduced to guarantee the success of the operation and patient safety, including minimum bone dimensions: a minimum height of 3 mm of bone between the maxillary ridge and the nasal cavity, and at least 3 mm of implant anchorage in the nasal concha and frontonasal process of the maxilla. During surgery, the installation of the implant requires an insertion torque of more than 35 N.cm to allow the placement of the total fixed prosthesis with immediate loading. (Source: Transnasal implants as anterior anchorage abutment in atrophic total maxillae and anatomical classification, Vanderlim Branco Camargo et al, 2020).

Seeking to reduce the risks and increase the number of patients in whom the Vanderlim Transnasal Implant Technique can be applied, the inventor compiled information from CT scans of 60 patients who had been screened for operation using the Vanderlim Technique over 7 years. The patients were then divided into 3 groups based on the anatomical dimensions of their nasal conchae:
**I. Large nasal concha**, larger than 4.8mm. This corresponds to 23.3% of patients. In these cases, the Vanderlim technique can be used with existing implants;
**II. Medium nasal concha**, size between 3.5mm and 4.8mm. This corresponds to 55% of patients. A critical situation, as the use of existing implants on the market for the Vanderlim technique often causes the concha to fracture during milling or implant installation; and
**III. Small nasal concha**, smaller than 3.5mm. This corresponds to 21.7% of patients. It is not possible to use existing implants on the market for the Vanderlim technique.

The study concludes that of the 60 patients screened for the technique, only 14 have sufficient nasal concha volume for the safe use of implants on the market. The remaining 46 patients are at high risk of fracture of the nasal concha bone during drilling or placement of the implant (currently available), resulting in a lack of torque on the implant and the impossibility of immediate loading and/or resorption of this thin bone in the long term, as well as a lack of anchorage, leading to loss of the implant.

Furthermore, it was observed that, as the implant head is anchored to the residual bone (due to bone loss) in the patient's jaw, implants with a cylindrical top shape are too bulky and are not indicated.

The inventor noted that tissue level implants offer significant advantages over bone level implants, especially in terms of preserving bone and gum health, due to their design and method of placement. Firstly, they help preserve the bone crest, as they are positioned above the bone, preventing bone resorption caused by micro-movements and minimizing stress in the area. In addition, their prosthetic connection occurs above the gum, which reduces the risk of marginal bone loss and ensures greater stability of the bone over time.

Another benefit is the stability of the soft tissues, thanks to the polished transmucosal neck, which favors biological sealing and reduces gingival inflammation, as there is less accumulation of bacterial plaque. Maintenance is also made easier, as access to the implant collar is easier, reducing the risk of peri-implantitis. The prosthetic connection outside the bone area also reduces the chances of micromovement, which contributes to the preservation of the bone crest and increases the implant's longevity.

Finally, tissue level implants are more predictable in patients with thin gingival biotypes, offering better support for the soft tissues and preserving aesthetics over time. In short, these implants guarantee greater bone preservation, gingival stability and ease of maintenance, making them ideal for cases requiring long-term peri-implant health.

The NASA (Nasal Anatomic Systematic Approach) classification was developed to properly position the implant body and head, as well as to improve the development of the transnasal implant. This classification makes it possible to identify the region of the residual alveolar crest with the greatest bone volume to stabilize the implant, and is also used to plan the locking of the threads of the implant body in the internal cortex of the nasal cavity.

Based on these parameters and with the aim of developing the ideal Transnasal Implant for the correct execution of the Vanderlim technique, the inventor developed a new implant model, with appropriate dimensions to treat all types of bone anatomy of the nasal concha (small, medium and large); which allows the use of narrower drills, avoiding bone fracture; and which obtains a torque of more than 35N.cm, allowing immediate installation of the prosthesis.

This new implant has a partially smooth side that avoids damaging the nasal mucosa and facilitates healing, maintaining adequate support by the threads in contact with the bone wall of the nasal cavity. Where, in the NASA 0,1,2,3 anatomical classification, the threads will face the vestibular, lateral maxillary wall and canine abutment, and in the NASA 4 anatomical classification the threads will face the palate. On the other hand, the smooth part of the implant body will be in contact with the nasal mucosa in anatomical classifications NASA 0,1,2,3 and in contact with the soft tissue of the vestibular flap in classification NASA 4. In this way, the smooth part will always face the soft tissue to prevent irritation.

The tip of the new implant is thinner, reducing the size of the drill used initially and, consequently, minimizing damage to the bone. The introduction of the implant minimizes the chance of fracturing the bone crest of the maxilla, as it has a conical head, and accommodates more easily to different nasal anatomies. With these dimensions, surgery becomes simpler and less traumatic, feasible to all implant dentists to install, with greater tolerance for possible unforeseen events, expanding the possibility of safe treatment using the technique from 13% to effectively 100% of cases.

### Detailed description of the drawings

The following figures are attached for a better understanding of the present patent:
Figure 1 illustrates the top view of the Transnasal dental implant (1), with emphasis on the smooth section (121);
Figure 2 illustrates the front view of the Transnasal dental implant (1) with emphasis on the head (11), the body (12) and the tip (13);
Figure 3 illustrates the perspective view of the Transnasal dental implant (1);
Figure 4 illustrates the lateral view of the Transnasal dental implant (1), with emphasis on the index finger (116);
Figure 5 illustrates the lower perspective view of the Transnasal dental implant (1), illustrating the helical cut-out (131);
Figure 6 illustrates the lateral view of the Transnasal dental implant (1), with emphasis on the tip (13) with helical cutouts (131);
Figure 7 illustrates the front view of the Transnasal dental implant (1); indicating the cross sections (D1), (D2), (D3), (D4) and (D5);
Figure 8 illustrates the cross-section with diameter 1 (d1);
Figure 9 illustrates the cross-section with diameter 2 (d2);
Figure 10 illustrates the cross section with diameter 3 (d3);
Figure 11 illustrates the cross section with diameter 4 (d4);
Figure 12 illustrates the cross section with final diameter (d5); and

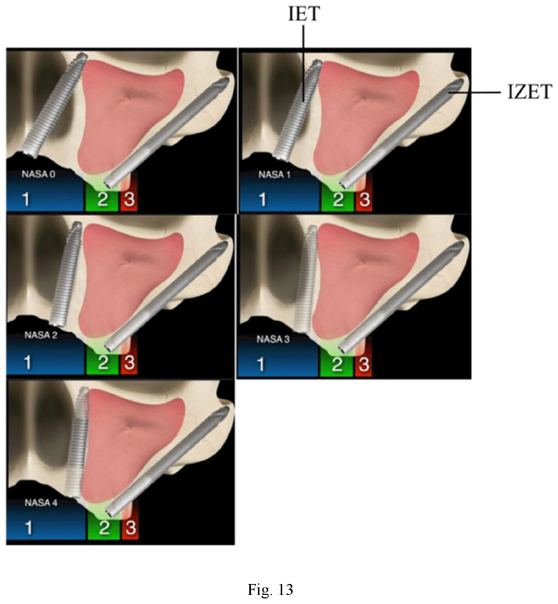

Figure 13 shows the NASA (Nasal Anatomic Systematic Approach) classification with the implant of the state of the art (IET) and the zygomatic implant of the state of the art (IETZ).

### Description of the invention

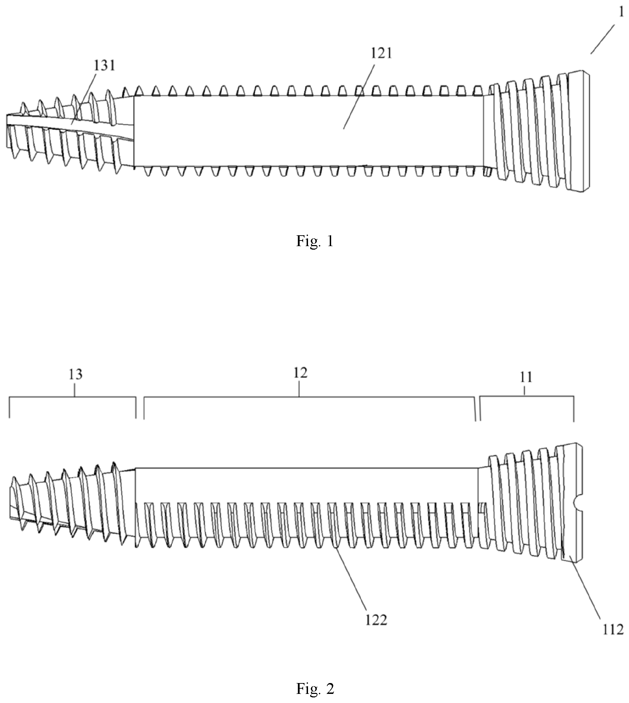

According to figure 2, the Transnasal dental implant (1), preferably in pure grade 4 titanium, or alternatively in titanium alloys with zirconium, or alternatively biocompatible polymers, has a head (11), a body (12) and a tip (13).

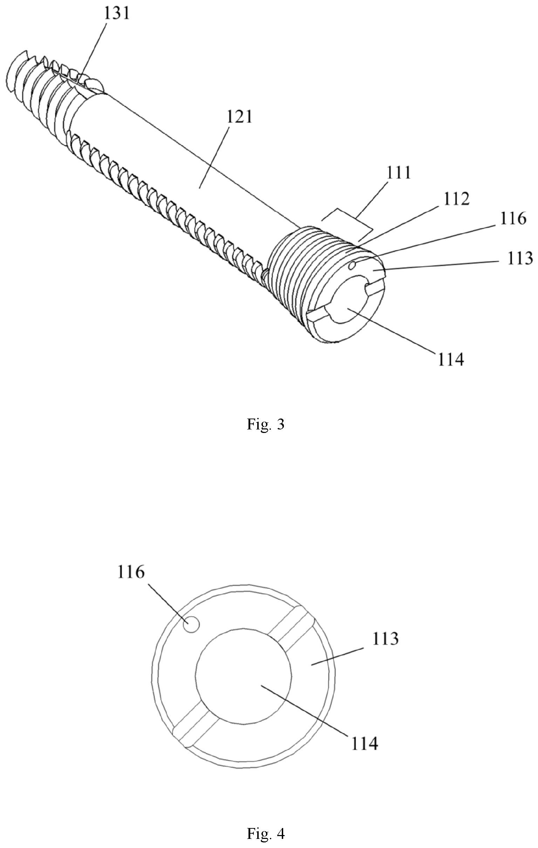

According to figures 3 and 4, the head (11), which has a truncated cone shape, has a smooth side (112) in its upper part with a length of 1mm to 1.8mm, preferably 1. 5mm, with its edges in contact with the face (113) chamfered; it has an upper thread (111) with a length of 3.5mm to 4.3mm, preferably 4.0mm, which runs along the side of the conical body of the head (11); it has a flat face (113); it has a hole for the intermediate (114); and it has an indicator (116) on the face (113) centered on the smooth section (121).

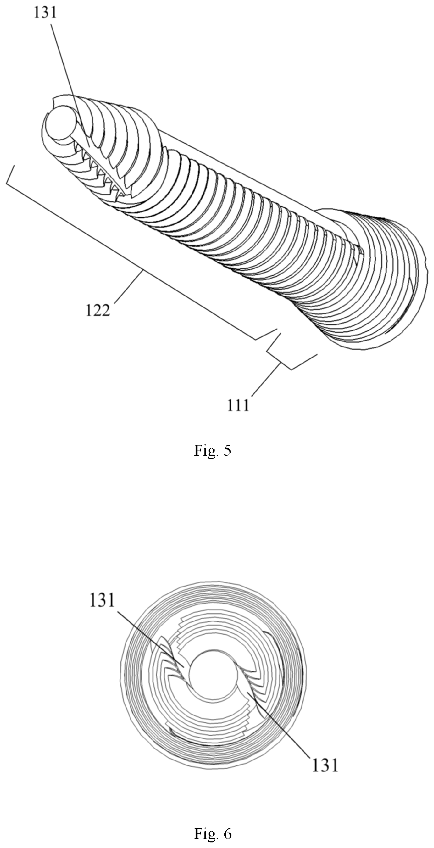

According to figures 1 and 5, the body (12) has a cylindrical shape with a length of between 9mm and 19mm, has a smooth section (121) that runs through half, or 180°, of the body (12); and has a thread (122), continuing the upper thread (111), which runs through half, or 180°, of the body (12) and gradually changes to a triangular thread as it approaches the tip (13).

According to figures 1, 2 and 6, the tip (13) is 5mm to 8mm, preferably 6mm, long; and has a helical cut-out (131) 4mm to 6.5mm, preferably 6mm, long.

### Examples of embodiments of the invention

In the head (11) of the Transnasal dental implant (1), the hole for the intermediate (114) can be arranged in different ways to allow different intermediaries to be fitted, such as Morse cone, external hexagonal, internal hexagonal, etc. Similarly, the key slot can be altered to accommodate different insertion tools.

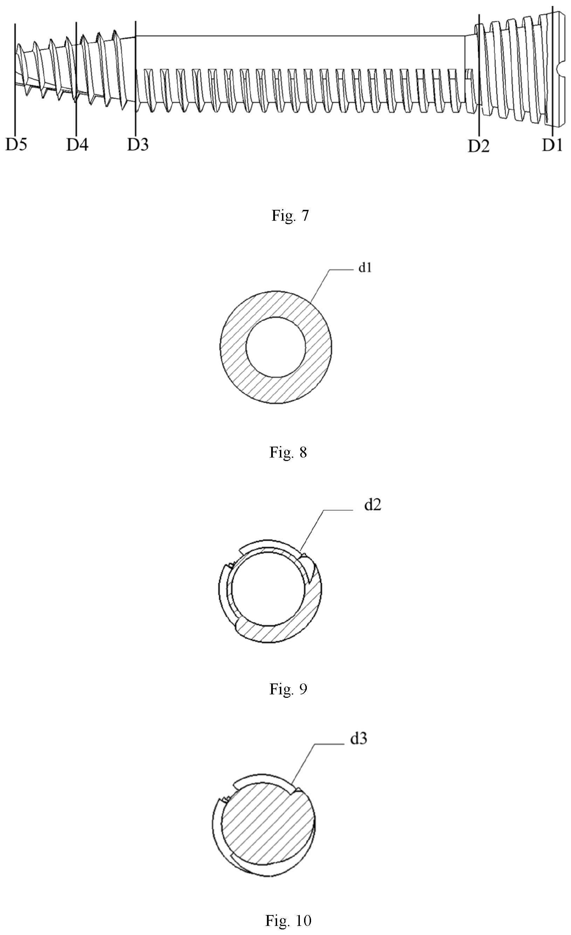

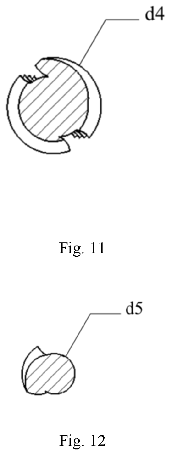

According to figures 7 to 12, the head (11) has a cross-section with an initial diameter 1 (d1) of 3.7mm to 4.3mm, preferably 3.75mm, which gradually reduces until the body (12) begins to have a diameter (d2) of 3.3mm to 3.7mm, preferably 3.5mm; the body (12) is cylindrical and has a constant diameter (d2) to (d3) of 3.3mm to 3.7mm, preferably 3.5mm; the tip (13) has a diameter (d3) of 3.3mm to 3.7mm, preferably 3.5mm; has a diameter 4 (d4) of 2mm to 3mm, preferably 2.5mm at its midpoint; and has a final diameter (d5) of 0.8mm to 1.8mm, preferably 1.5mm at its apex.

The geometry of the Transnasal dental implant (1) has different functions where the upper thread (111) of the head (11) has a square thread apex to maintain the high torque on the residual bone of the maxilla. The indicator (116) points out the position of the smooth part, offering a visual marker to the implant dentist to facilitate the positioning of the thread (122). The smooth side (112) is responsible for leaving the Transnasal dental implant (1) at tissue level, so that the portion closest to the gingiva is above the bone, minimizing direct interaction between the bone and the implant in the bone crest. The smooth section (121) of the body (12) avoids damaging the soft tissues (nasal mucosa in anatomical classifications NASA 0,1,2,3 and vestibular flap in classification NASA 4) and reduces the possibility of inflammation. The thread (122) of the body (12) should always be in contact with the bone of the vestibular wall of the nasal cavity to increase insertion torque, increase primary stability, immediate loading, and has a square thread apex that gradually becomes triangular as it approaches the tip (13), allowing cutting and simultaneously improving the support and integration of the Transnasal dental implant (1). The tip (13) has a length of 5mm to 8mm to anchor in the nasal bone of different patients, with an apex diameter of 0.8mm to 1.8mm to prevent damage and fractures to the bone, allow anchoring in all nasal concha sizes and maintain high stability, the thread of the tip (13) becomes completely triangular when it reaches its apex to facilitate cutting. The cut-out (131) in the tip helps to remove residual matter from the drilling process and ensures a more robust fixation.

According to figure 4, the indicator (116) can have different shapes, adapting to the different key socket formats, as long as its function of serving as a visual marker to distinguish the smooth section (121) from the thread (122) is maintained.

According to figures 1, 2 and 3, the thread that runs through the entire Transnasal dental implant (1), including the upper thread (111) and the thread (122), starts at the apex of the tip (13) with a triangular profile and gradually changes to a square profile at the end of the upper thread (111).

Alternatively, to further improve initial stability, the upper thread (111) and the thread (122) can be double or progressive to increase initial fixation and promote better primary locking in the bone, especially in situations of low bone density.

Alternatively, the Transnasal dental implant (1) can make use of a linear cut-out (131) at its tip (13).

## Claims

1. TRANSNASAL DENTAL IMPLANT, preferably in pure grade 4 titanium, or alternatively in titanium alloys with zirconium, or alternatively biocompatible polymers, with a face (113) and a hole for the intermediate (114) **characterized by** having a head (11), a body (12) and a tip (13), wherein:
the head (11), with a truncated cone shape, has a smooth side (112) in its upper part with a length of 1mm to 1.8mm, preferably 1.5mm, with its edges in contact with the face (113) chamfered; it has an upper thread (111) with a length of 3.5mm to 4.3mm, preferably 4mm, which runs along the side of the conical body of the head (11); and it has an indicator (116) on the face (113) centered on the smooth section (121);
the body (12), cylindrical in shape with a length of 9mm to 19mm, has a smooth section (121) that runs through half, or 180°, of the body (12); and has a thread (122), continuing the upper thread (111), which runs through half, or 180°, of the body (12);
the tip (13) is 5mm to 8mm, preferably 6mm long, and has a helical cut-out (131) 4mm to 6.5mm, preferably 6mm long.

2. TRANSNASAL DENTAL IMPLANT, according to claim 1, **characterized by** the head (11) having a cross-section with an initial diameter 1 (d1) of 3.7mm to 4.3mm, preferably 3.75mm, which gradually reduces until the body (12) begins to have a diameter (d2) of 3.3mm to 3.7mm, preferably 3.5mm; the body (12) is cylindrical and has a constant diameter (d2) to (d3) of 3.3mm to 3.7mm, preferably 3.5mm; the tip (13) has a diameter (d3) of 3.3mm to 3.7mm, preferably 3.5mm; has a diameter 4 (d4) of 2mm to 3mm, preferably 2.5mm at its midpoint; and has a final diameter (d5) of 0.8mm to 1.8mm, preferably 1.5mm at its apex.

3. TRANSNASAL DENTAL IMPLANT, according to claim 1, **characterized in that** the indicator (116) can have different shapes, adapting to the different shapes of the key socket (115), as long as its function of serving as a visual marker to distinguish the position of the smooth section (121) from the thread (122) is maintained.

4. TRANSNASAL DENTAL IMPLANT according to claim 1, **characterized by** the thread that runs through the entire Transnasal dental implant (1), including the upper thread (111) and the thread (122), starts at the apex of the tip (13) with a triangular profile and gradually changes to a square profile at the end of the upper thread (111).

5. TRANSNASAL DENTAL IMPLANT according to claim 1, **characterized in that,** alternatively, the thread that runs through the entire Transnasal dental implant (1), including the upper thread (111) and the thread (122), are double or progressive.

6. TRANSNASAL DENTAL IMPLANT according to claim 1, **characterized in that** it alternatively makes use of a linear cut-out (131) at its tip (13).
